# EUROPÄISCHE PATENTSCHRIFT

(11) **EP 2 652 911 B1**
(45) Veröffentlichungstag und Bekanntmachung des Hinweises auf die Patenterteilung: **18.08.2021**
(21) Anmeldenummer: 11801701.1
(22) Anmeldetag: 15.12.2011
(51) Int. Cl.: H04L 12/437, H04L 12/40, H04L 1/20, H04L 12/24, H04L 12/26

(54) **ADERBRUCH-DIAGNOSE**
WIRE BREAKAGE DIAGNOSIS
DIAGNOSTIC DE RUPTURE DE CONDUCTEUR

(30) Priorität: 15.12.2010 DE 102010054645
(43) Veröffentlichungstag der Anmeldung: 23.10.2013
(73) Patentinhaber: Hirschmann Automation and Control GmbH, 72654 Neckartenzlingen (DE)
(72) Erfinder: JOHANNES, Christian, 72631 Aichtal (DE); SHOUANI, Rami, 72411 Bodelshausen (DE); MOHL, Dirk, 73733 Esslingen (DE); DOLEZAL, Jochen, 73770 Denkendorf (DE)
(74) Vertreter: Greif, Thomas
(86) Internationale Anmeldenummer: PCT/EP2011/072929
(87) Internationale Veröffentlichungsnummer: WO 2012/080405

(56) Entgegenhaltungen:
- WO-A1-03/067804
- DE-A1-102008 042 172
- ISHIKURA M ET AL: "A TRAFFIC MEASUREMENT TOOL FOR IP-BASED NETWORKS", IEICE TRANSACTIONS ON INFORMATION AND SYSTEMS, INFORMATION & SYSTEMS SOCIETY, TOKYO, JP, Bd. E82-D, Nr. 4, 1. April 1999 (1999-04-01), Seiten 756-761, XP000832559, ISSN: 0916-8532
- None

## Beschreibung

Die Erfindung betrifft ein Verfahren zum Betreiben eines Netzwerkes mit einer vorgebbaren Topologie, wobei innerhalb der Topologie mehrere Netzwerkgeräte vorhanden sind, die untereinander über an ihren Datenports angeschlossene mehradrige Datenleitungen miteinander verbunden sind und Daten austauschen, wobei weiterhin Testtelegramme auf die Datenleitungen geschickt werden, um zu überprüfen, ob zwischen zwei Datenports von zwei Netzwerkgeräten die Verbindung über die zwischengeschaltete Datenleitung besteht oder nicht.

Innerhalb von Netzwerken mit einer vorgegebenen Topologie sind mehrere Netzwerkgeräte angeordnet, wobei diese Netzwerkgeräte mindestens einen, meistens zwei Datenports aufweisen (insbesondere bei einer Ringtopologie), wobei zwei Netzwerkgeräte über eine Datenleitung und über ihren zugehörigen Datenport miteinander verbunden sind und hierüber kommunizieren, das heißt Daten austauschen. Ein Austausch von Daten bedeutet, dass elektrische Signale in Form von Datenpakete über die Datenleitungen verschickt werden.

Bei einer Netzwerktopologie ist es zur Sicherstellung des Betriebes und der Funktion des Netzwerkes erforderlich, dass zwischen zwei Netzwerkgeräten immer eine Datenverbindung besteht, damit zwischen diesen beiden Netzwerkgeräten Daten ausgetauscht werden können.

In der Praxis kommt es immer wieder vor, dass die Datenverbindung zwischen zwei Netzwerkgeräten entweder vollständig oder teilweise unterbrochen ist. Die vollständige Unterbrechung kann beispielsweise dadurch entstehen, dass ein Steckverbinder aus dem Datenport des einen Netzwerkgerätes herausgezogen wird oder dass die Datenleitung komplett durchtrennt wird. Eine teilweise Unterbrechung kommt meistens deshalb zustande, dass ein Steckverbinder nicht korrekt in den Datenport eingesteckt ist oder dass die Datenleitung geknickt oder gequetscht wurde.

Diese vorstehend genannten Fehlerfälle lassen sich eindeutig durch Testtelegramme, die über die Datenleitungen geschickt und ausgewertet werden, erfassen. Dies erfolgt beispielsweise mittels eines Verfahrens, wie es in der DE 198 10 587 A1 beschrieben ist. Dort ist ein Netzwerk, insbesondere ein Ethernet-Netzwerk, mit Redundanzeigenschaften offenbart. Ein an die Linienenden des Netzes angeschlossener Redundanzmanager prüft durch Testtelegramme den Zustand des Netzes. Bei einer Netzunterbrechung verbindet der Redundanzmanager die Linien, die noch funktionstüchtig sind, und stellt damit im Millisekundenbereich den weiteren Netzbetrieb sicher. Ein in der DE 198 10 587 A1 beschriebenes Verfahren und eine entsprechende Vorrichtung wird von der Anmelderin / Patentinhaberin unter der Bezeichnung "HIPERRING" entwickelt, hergestellt und vertrieben.

In der Praxis hat sich herausgestellt, dass ein vorstehend beschriebenes Netzwerk mit Redundanzeigenschaften zufriedenstellend zu betreiben ist. Es hat sich jedoch weiterhin herausgestellt, dass es bei der Datenübertragung über die Datenleitungen zwischen zwei Netzwerkgeräten zu Problemen kommen kann, wenn ein Fehler auf der Datenübertragungsstrecke vorliegt, der von der bekannten Vorrichtung nicht oder nicht zuverlässig erfasst werden kann. Liegt ein solcher Fehler vor, geht der bekannte Ringredundanzmanager davon aus, dass die Datenübertragung zwischen zwei Netzwerkgeräten nicht gestört ist und sieht deshalb keine Veranlassung, auf einen anderen Übertragungsweg umzuschalten. Da nicht umgeschaltet wird, jedoch ein Fehler vorliegt, kann die Datenübertragung über diese fehlerhafte Datenleitung noch erfolgen, mit der Konsequenz, dass die übertragenen Daten nicht fehlerfrei von dem einen Netzwerkgerät zu dem anderen Netzwerkgerät übertragen werden. Die Datenleitungen bestehen heutzutage aus mehradrigen Datenleitungen (zum Beispiel Cut 5 oder Cut 6-Leitungen). Hierbei kann es zu dem Defekt kommen, dass bei Unterbrechung einer einzelnen Ader für den Ringredundanzmanager und die angeschlossenen Netzwerkgeräte die Datenübertragung noch als fehlerfrei erkannt wird, aber aufgrund des Aderbruches nicht mehr fehlerfrei erfolgt. Hierdurch können beispielsweise Datenpakete entweder komplett verloren gehen (wobei der Verlust nicht festgestellt wird) oder durch Übersprecheffekte zwischen einzelnen Adern doch noch erfolgen, wobei aber trotz dieser Datenübertragung aufgrund des Übersprecheffektes die Datenübertragung an sich nicht fehlerfrei ist.

Aus der DE 103 49 600 A1 ist ein Verfahren zur Überprüfung von Leitungsfehlern in einem Bussystem bekannt, das mindestens zwei Busteilnehmer aufweist, die zum Zwecke der Datenkommunikation untereinander an einen mindestens zwei Busleitungen aufweisenden Datenbus angeschlossen sind, wobei die Busteilnehmer einen rezessiven Zustand und einen dominanten Zustand annehmen können und wobei in den Busteilnehmern ein internes High-Potenzial und ein internes Low-Potenzial zur Verfügung steht, wobei weiterhin die Überprüfung eines Leitungsfehlers von dem Busteilnehmer durchgeführt wird, der sich im dominanten Zustand befindet und wobei nochmals weiterhin die Überprüfung von Leitungsfehlern durch Vergleich von Spannungspegeln auf den Busleitungen mit Schwellwerten durchgeführt wird, die auf den internen High-Pegel oder den internen Low-Pegel des Busteilnehmers bezogen sind.

Die Druckschrift DE 10 208 042 172 A1, offenbart ein Kommunikationssystem, z.B. Controller Area Network, CAN-Bus-System, für ein Kraftfahrzeug. Eine Signalisierungsnachricht zur Signalisierung eines Bitfehlers wird während des Auftretens des Bitfehlers über den Kanal übertragen. Eine Bitfehlerrate, BER, des gemeinsamen Kanals in Abhängigkeit von der Fehlerrate der Nachricht wird bestimmt, abhängig von der Kanalbelastung und einer Kapazität des Kanals.

Die Druckschrift WO 03/067804 A1, offenbart ein Verfahren zum Erkennen von Bitfehlern, die innerhalb eines Netzwerks übertragen werden, und zum Berechnen einer erkannten Bitfehlerrate, BER. In Abhängigkeit von der erkannten Bitfehlerrate wird eine Restfehlerwahrscheinlichkeit, d.h. eine nicht erkannte Fehlerwahrscheinlichkeit, ermittelt.

Es werden korrigierende Maßnahmen zur Reduzierung der Auswirkungen der Restfehler ergriffen, z. B. erneute Übertragung von Nachrichten.

Der Erfindung liegt daher die Aufgabe zugrunde, ein Verfahren zum Betreiben eines Netzwerkes mit einer vorgebbaren Topologie bereitzustellen, mit dem Fehler in der Datenübertragung zwischen zwei Netzwerkgeräten zuverlässig erkannt werden. Insbesondere sollen Aderbrüche von mehradrigen Datenleitungen erkannt und entsprechend darauf reagiert werden.

Diese Aufgabe ist durch die Merkmale des Patentanspruches 1 gelöst.

Erfindungsgemäß ist vorgesehen, dass in einem vorgebbaren Zeitintervall auf einer Datenleitung zwischen zwei Datenports die Anzahl von aufgetretenen CRC-Fehlern und die Anzahl der in diesem Zeitintervall übertragenen Daten (Datenpakete) ermittelt und zumindest aus diesen beiden Werten eine Fehlerrate berechnet wird, die ein Maß für die Funktionstüchtigkeit der mehradrigen Datenleitung ist.

Die zyklische Redundanzprüfung (engl. cyclic redundancy check, daher auch als CRC abgekürzt) ist an sich ein Verfahren zur Bestimmung eines Prüfwerts für Daten, um Fehler bei der Übertragung oder Speicherung erkennen zu können.

Für jedes Datenpaket wird nach einem bestimmten Verfahren ein sogenannter CRC-Wert berechnet, der dem Datenpaket angefügt wird. Zur Überprüfung der Daten wird dasselbe Berechnungsverfahren auf den Datenblock einschließlich des angefügten CRC-Werts angewandt. Ist das Ergebnis dann Null, kann angenommen werden, dass das Datenpaket unverfälscht ist. Verschiedene technische Anwendungen weichen allerdings von diesem Schema ab, indem sie beispielsweise die Berechnung mit einem bestimmten Wert initialisieren oder den CRC-Wert vor der Übermittlung invertieren.

CRC ist an sich zwar so ausgelegt, dass Fehler bei der Übertragung der Daten, wie sie beispielsweise durch Rauschen auf der Leitung verursacht werden könnten, mit hoher Wahrscheinlichkeit entdeckt werden. CRCs von seriellen Datenübertragungen können sehr einfach in Hardware realisiert werden. Zum Beispiel werden Datenübertragungen über Ethernet, sowie die meisten Festplatten-Übertragungen mit CRC-Verfahren geprüft. Allerdings ist es nicht möglich, mit dem CRC-Verfahren Fehler bei der Datenübertragung, die durch einen Aderbruch einer mehradrigen Datenleitung verursacht sind, zu erfassen.

Das CRC-Verfahren ist somit zunächst nur für die Erkennung von zufälligen Fehlern ausgelegt. Es ist nicht geeignet, die Integrität der Daten zu bestätigen. Das heißt, dass es ist ohne Weiteres in der Praxis in Folge eines Aderbruches möglich ist, dass sich durch die daraus resultierende Modifikation ein Datenstrom erzeugt wird, der den gleichen CRC-Wert wie eine gegebene Nachricht hat.

Der Name des Verfahrens beruht darauf, dass der angefügte Wert keinen Informationsgehalt besitzt, der nicht bereits in dem zugrunde liegenden Datenblock enthalten ist. Er ist deshalb redundant. CRCs beruhen auf zyklischen Codes. Das sind Block-Codes, die die Eigenschaft haben, dass jede zyklische Verschiebung der Bits eines gültigen Code-Worts ebenfalls ein gültiges Code-Wort ist.

Die Berechnung des CRC-Werts beruht auf Polynomdivision: Die Folge der zu übertragenden Bits wird als dyadisches Polynom betrachtet.

Die Bitfolge der Coderepräsentation der Daten wird durch ein vorher festzulegendes Generatorpolynom (das CRC-Polynom) Modulo mod(2) geteilt, wobei ein Rest bleibt. Dieser Rest ist der CRC-Wert. Bei der Übertragung des Datenpakets hängt man den CRC-Wert an das originale Datenpaket an und überträgt ihn mit.
Um zu verifizieren, dass die Daten keinen Fehler beinhalten, wird das empfangene Datenpaket mit angehängtem CRC-Wert als Binärfolge interpretiert, erneut durch das CRC-Polynom Modulo geteilt und der Rest ermittelt. Wenn kein Rest bleibt, ist entweder kein Fehler aufgetreten oder es ist ein (sehr unwahrscheinlicher) Fehler aufgetreten, der in Polynomdarstellung das CRC-Polynom als Faktor hat.

Es ist darauf zu achten, dass es sich bei den Einsen und Nullen der Kommunikation mit CRC nicht um die Repräsentation einer Zahl, sondern um ein Polynom handelt. Das bedeutet, dass die Modulodivision mit Binärzahlen (oder Zahlen allgemein) beispielsweise mit einer Netzwerkmanagementstation nicht auf das richtige Ergebnis führt.

Die Datenübertragung erfordert bestimmte unerlässliche Übereinkommen. Zum einen muss dem Empfänger bewusst sein, dass überhaupt eine gesicherte Übertragung der Ursprungsdaten stattfinden soll. An der Art des eintreffenden Datenstromes allein ist dies nicht zu erkennen. Des Weiteren muss der Empfänger dasselbe CRC-Polynom und Rechenverfahren benutzen wie der Sender. Und schließlich muss der Empfänger die Information besitzen, wo im Datenstrom sich die zusätzlich zu den Daten übertragene Prüfsumme befindet.

Die Erfindung nutzt also das vorstehend beschriebene bekannte CRC-Verfahren aus, um Aderbrüche oder dergleichen innerhalb der mehradrigen Datenleitung festzustellen. In Abhängigkeit der Feststellung und der berechneten Fehlerrate kann entsprechend auf diesen Fehler reagiert werden. Dabei macht sich die Erfindung in überraschender Weise von dem bekannten CRC-Verfahren bekannt, dass wie folgt zur Anwendung kommt. Zur Verdeutlichung wird noch einmal klargestellt, dass unter dem Begriff "Aderbruch" nicht nur der physikalische Bruch (Unterbrechung) einer Ader (elektrischer Leiter) zu verstehen ist, sondern dass darunter allgemein Unterbrechung in einem Strang der Datenleitung zu verstehen sind. Hierunter fällt zum Beispiel auch, dass bei einer mehrpoligen Steckverbindung ein Kontakt gar nicht oder nicht richtig mit seinem Gegenkontakt zusammengesteckt ist, dass im Netzwerkgerät im Bereich des Datenports eine Leiterbahn unterbrochen ist und dergleichen. Es kommt also darauf an, dass Unterbrechungen in einem einzelnem Strang (Übertragungsweg) der Datenleitung erfasst und ausgewertet werden und entsprechend der Auswertung darauf reagiert werden kann (Aktivierung eines Redundanzmechanismus). Eine komplette Unterbrechung (weil zum Beispiel der Steckverbinder überhaupt nicht gesteckt ist oder die gesteckte Datenleitung komplett durchgetrennt ist) soll nicht mit dem erfindungsgemäßen Verfahren erfasst werden.

In Weiterbildung der Erfindung ist das Zeitintervall größer oder gleich 1 Sekunde, vorzugsweise größer oder gleich 5 Sekunden und nochmals vorzugsweise größer oder gleich 10 Sekunden. Dieser Wert von 1, 5 oder 10 Sekunden ist bei Netzwerken, insbesondere Ringnetzwerken, deshalb von besonderem Vorteil, da hiermit ein Zeitintervall zur Verfügung steht, das ausreichend groß ist, um genügend CRC-Fehler und die übertragenen Datenpakete zu zählen und daraus die Fehlerrate zu berechnen. Ebenso ist dieser Zeitwert besonders vorteilhaft bei der Anwendung von Ethernet-Ringnetzwerken, da dieses Zeitintervall einerseits groß genug ist, um genügend belastbare Daten zu ermitteln und andererseits die Rechenleistung der Recheneinheiten in den Netzwerkgeräten oder in einem Ringredundanzmanager nicht unnötig zu belasten.

In Weiterbildung der Erfindung stellt eine Fehlerrate von größer oder gleich 1000 PPM (entsprechend 0,1%) einen Aderbruch der Datenleitung dar. Hierbei handelt es sich um einen Schwellenwert der Fehlerrate. Ist dieser Schwellenwert überschritten, wird davon ausgegangen, dass ein Aderbruch in der Datenleitung vorliegt und die Datenübertragung zwischen den zugehörigen Ringports der beiden Netzwerkgeräte nicht mehr fehlerfrei erfolgt, obwohl die beiden betroffenen Netzwerkgeräte und / oder der Ringredundanzmanager diesen Fehler noch nicht oder gar nicht festgestellt haben. Dieser Wert der Fehlerrate kann selbstverständlich auch nach oben oder unten variiert werden. Die Absenkung der Fehlerrate nach unten hat jedoch zur Folge, dass gegebenenfalls häufiger Fehlsignale erfasst und als Aderbruch interpretiert werden, so dass es zu einer unnötigen Umschaltung der Netzwerkgeräte beziehungsweise des Ringredundanzmanagers auf andere Datenleitungen kommt. Eine Erhöhung dieses Schwellwertes hat zur Folge, dass möglicherweise schon vorliegende Aderbrüche der mehradrigen Datenleitung noch nicht oder nicht rechtzeitig erkannt werden. Daher kommt es zu einer verspäteten Umschaltung von der fehlerhaften Datenleitung zu den anderen, fehlerfrei arbeitenden Datenleitungen. Daher sollte daran gedacht werden, dass die Fehlerrate in einem Bereich von 1000 PPM bis +/- 20% variiert werden kann, um einerseits eine zuverlässige Erfassung von Aderbrüchen sicherzustellen und andererseits unnötige Umschaltungen oder zu häufige Umschaltungen zu vermeiden.

Entsprechend der Erfindung wird, um einen Aderbruch festzustellen, pro Ringport (Datenport des Netzwerkgerätes) in einem festgelegten Zeitintervall die Anzahl der CRC-Fehler und die Anzahl der übertragenen (empfangenen) Datenpakete ermittelt und die Fehlerrate pro empfangenem Paket ermittelt durch die Formel: Anzahl der CRC-Fehler plus Anzahl der übertragenen Daten, multipliziert mit einem Rechenfaktor, wobei das Ergebnis durch die Anzahl der übertragenen Daten dividiert wird. Hieraus wird eine Fehlerrate mit der Einheit PPM abgeleitet, wobei, wie weiter oben schon ausgeführt, in vorteilhafter Weise die Fehlerrate größer oder gleich 1000 PPM einen Aderbruch der Datenleitung darstellt. Somit sind Fehlerraten von größer oder gleich 1000 PPM (+/- 20%) als Aderbruch der zumindest einen Ader der mehradrigen Datenleitung zu interpretieren. Dies führt dazu, wenn die Fehlerrate den gesetzten Schwellwert überschreitet, dass der Datenport dieses Netzwerkgerätes abgeschaltet und auf seinen zweiten Datenport umgeschaltet wird, damit dieses Netzwerkgerät in dem Netzwerk, insbesondere dem Ringnetzwerk, verbleibt und ein Datenaustausch über dieses Gerät weiterhin möglich ist. Ausgelöst durch die Überschreitung des Schwellwertes für die Fehlerrate wird zur Abschaltung der zugehörigen Datenports des betroffenen Netzwerkgerätes (beziehungsweise beider betroffenen Netzwerkgeräte) ein Verfahren angewendet, wie es aus der DE 198 10 587 A1 bekannt ist. Daneben sind selbstverständlich auch andere Redundanzmechanismen als Reaktion auf die erhöhte Fehlerrate denkbar.

Bei einem Ausführungsbeispiel beträgt in vorteilhafter Weise der Rechenfaktor 10000, da hiermit im Verhältnis zu der Anzahl der CRC-Fehler und der Anzahl der übertragenen Daten beziehungsweise Datenpakete sich eine Fehlerrate von 1000 PPM erzielen lässt. In Weiterbildung der Erfindung wird der Zustand eines Datenports von außen abgefragt, insbesondere durch SNMP abgefragt. Es besteht entweder die Möglichkeit, dass der Zustand des Datenports von dem eigenen Netzwerkgerät erfasst und ausgewertet wird. In Abhängigkeit dieser Erfassung und Auswertung kann das jeweilige beziehungsweise betroffene Netzwerkgerät einen Redundanzmechanismus aktivieren. Vorteilhafter ist es jedoch, wenn von außen, das heißt außerhalb des Netzwerkgerätes (zum Beispiel durch eine Netzwerkmanagementstation) die Zustände der Datenports abgefragt und abhängig von der Abfrage reagiert wird. Das bedeutet, dass beispielsweise die Netzwerkmanagementstation die Fehlerraten der einzelnen Datenports der Netzwerkgeräte innerhalb des Netzwerkes ständig oder in bestimmten Zeitintervallen abfragt und dann, wenn Schwellwerte für die einzelnen Fehlerraten überschritten sind, ein Ringredundanzmechanismus aktiviert wird.

Für den Fall, dass die Daten eines Datenports entweder von dem Netzwerkgerät selber, von einem anderen Netzwerkgerät oder von der Netzwerkmanagementstation nicht abgefragt werden können, muss der Datenport des benachbarten Netzwerkgerätes, der über die Datenleitung mit dem fehlerhaften Datenport verbunden ist, abgeschaltet werden. Hierbei kann daran gedacht werden, dass dann, wenn festgestellt wurde, dass die Daten eines Datenports nicht abgefragt werden können, entweder direkt reagiert, insbesondere umgeschaltet, wird oder dass eine vorgebbare Anzahl von Abfragen, insbesondere drei bis zehn Abfragen, abgewartet wird, bevor der als fehlerhaft detektierte Datenport abgeschaltet und der Ringredundanzmechanismus aktiviert wird.

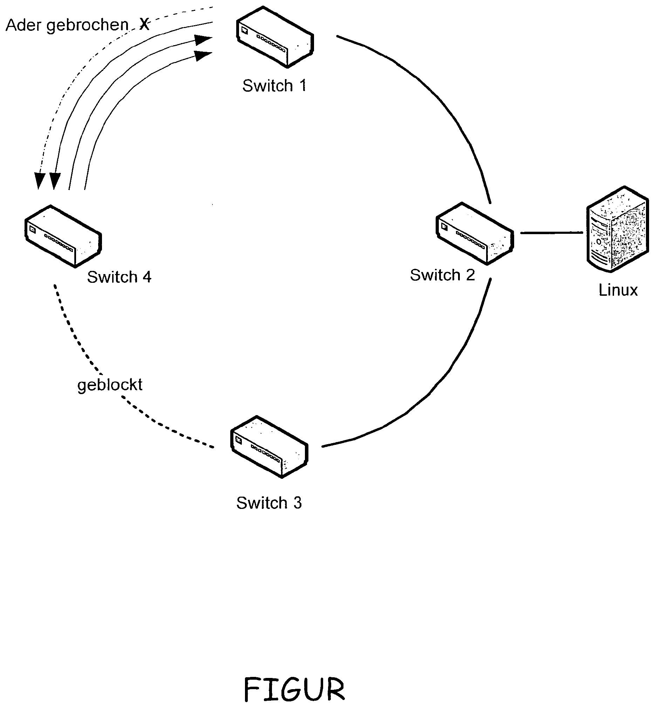

Zur Verdeutlichung des erfindungsgemäßen Verfahrens wird auf die Figur verwiesen.

In dieser Figur ist beispielhaft ein Netzwerk mit einer Ringtopologie dargestellt, wobei als Netzwerkgeräte Switche 1 bis 4 über Datenleitungen miteinander verbunden sind. Anstelle von Switchen kommen auch andere Netzwerkgeräte in Betracht. Außerdem können auch weniger oder mehr (Regelfall) als vier Netzwerkgeräte in dem Netzwerk angeordnet sein. Zur Beobachtung und Steuerung der Netzwerkgeräte von außen, insbesondere zur Steuerung deren Datenports, ist eine Netzwerkmanagementstation (in der Figur als Linux bezeichnet) vorhanden. Diese Netzwerkmanagementstation ist an einem der Netzwerkgeräte angeschlossen und kann über die Datenports und die daran angeschlossenen Datenleitungen dieses Netzwerkgerätes mit den anderen Netzwerkgeräten kommunizieren. In dem dargestellten Fall des Ausführungsbeispieles wird festgestellt, dass in der mehradrigen Datenleitung zwischen dem Switch 1 und dem Switch 4 eine Ader gebrochen ist. Dieser Aderbruch führt zu einer fehlerhaften Übertragung zwischen diesen beiden Switchen 1 und 4. Dabei ist jedoch Voraussetzung, dass der Fehler, der durch diesen Aderbruch hervorgerufen wird, nicht durch einen Ringredundanzmechanismus, wie er beispielsweise in der DE 198 10 587 A1 beschrieben ist, erkannt wird. Infolgedessen kann dieser bekannte Ringredundanzmanager auf den Aderbruch auch nicht reagieren. Deshalb ist das erfindungsgemäße Verfahren entweder auf einem Netzwerkgerät, auf mehreren Netzwerkgeräten, auf allen Netzwerkgeräten innerhalb des Netzwerkes und / oder auch auf der Netzwerkmanagementstation realisiert. Wird also mit dem erfindungsgemäßen Verfahren festgestellt, dass eine Ader der Datenleitung zwischen Switch 1 und Switch 4 gebrochen ist, wird die Datenleitung zwischen Switch 3 und 4, die bis dahin geblockt war (weil die Datenübertragung zwischen Switch 1 und Switch 4 funktionierte) geöffnet. Das bedeutet, dass der eine Datenport des Switches 4, an dem die Datenleitung zu dem Switch 1 angeschlossen ist, abgeschaltet beziehungsweise blockiert wird und der Datenport des Switches 4, an dem die Datenleitung zu dem Switch 3 angeschlossen ist, eingeschaltet beziehungsweise geöffnet wird. Somit ist nach Erkennung des Aderbruches in der Datenleitung zwischen Switch 1 und 4 diese Datenübertragung unterbrochen und wurde auf die Übertragung zwischen Switch 3 und Switch 4 umgeschaltet. Dadurch ist durch diesen aktivierten Ringredundanzmechanismus sichergestellt, dass sich nach wie vor alle Netzwerkgeräte in dem Netzwerk befinden und angesprochen werden können beziehungsweise Daten untereinander austauschen können. Gleichzeitig ist gewährleistet, dass auch jedes Netzwerkgerät nach wie vor sowohl vor der Umschaltung als auch nach der Umschaltung in Folge des festgestellten Aderbruches von der Netzwerkmanagementstation ansprechbar ist.

## Patentansprüche

1. Verfahren zum Betreiben eines Netzwerkes mit einer vorgebbaren Topologie, wobei innerhalb der Topologie mehrere Netzwerkgeräte vorhanden sind, die untereinander über an ihren Datenports angeschlossene mehradrige Datenleitungen miteinander verbunden sind und Daten austauschen, wobei weiterhin Testtelegramme auf die Datenleitungen geschickt werden, um zu überprüfen, ob zwischen zwei Datenports von zwei Netzwerkgeräten die Verbindung über die zwischengeschaltete Datenleitung besteht oder nicht, **dadurch gekennzeichnet, dass** in einem vorgebbaren Zeitintervall auf einer Datenleitung zwischen zwei Datenports die Anzahl von aufgetretenen Cyclic Redundancy Check, CRC-Fehlern und die Anzahl der in diesem Zeitintervall übertragenen Daten ermittelt und zumindest aus diesen beiden Werten eine Fehlerrate berechnet wird, die ein Maß für die Funktionstüchtigkeit der mehradrigen Datenleitung ist wobei die Fehlerrate berechnet wird durch die Formel Anzahl der CRC-Fehler plus Anzahl der übertragenen Daten, multipliziert mit einem Rechenfaktor, wobei das Ergebnis durch die Anzahl der übertragenen Daten dividiert wird.

2. Verfahren nach Anspruch 1, **dadurch gekennzeichnet, dass** das Zeitintervall größer oder gleich 1 Sekunde ist.

3. Verfahren nach Anspruch 1 oder 2, **dadurch gekennzeichnet, dass** eine Fehlerrate von größer oder gleich 1.000 PPM entsprechend 0,1 % einen Aderbruch der Datenleitung darstellt.

4. Verfahren nach einem der vorhergehenden Ansprüche , **dadurch gekennzeichnet, dass** der Rechenfaktor 10.000 beträgt.

5. Verfahren nach einem der vorhergehenden Ansprüche, **dadurch gekennzeichnet, dass** dann, wenn die Fehlerrate einen vorgebbaren Wert überschreitet, einer der beiden betroffenen oder beide Datenports abgeschaltet werden und ein Redundanzmechanismus aktiviert wird.

6. Verfahren nach einem der vorhergehenden Ansprüche, **dadurch gekennzeichnet, dass** der Zustand eines Datenports von außen abgefragt wird, insbesondere durch SNMP abgefragt wird.

## Claims

1. Method for operating a network having a predefinable topology, wherein multiple network devices are present within the topology that are connected to one another by way of multi-wire data lines connected to their data ports and interchange data, wherein additionally test messages are sent to the data lines in order to check whether or not the connection between two data ports of two network devices by way of the interposed data line exists, **characterized in that** the number of cyclic redundancy check, CRC, errors that have occurred on a data line between two data ports in a predefinable time interval and the number of data items transmitted in this time interval are ascertained and an error rate is calculated from at least these two values, which is a measure of the ability of the multi-wire data line to operate, wherein the error rate is calculated by means of the formula number of CRC errors plus number of transmitted data items, multiplied by a calculation factor, the result being divided by the number of transmitted data items.

2. Method according to Claim 1, **characterized in that** the time interval is greater than or equal to 1 second.

3. Method according to Claim 1 or 2, **characterized in that** an error rate of greater than or equal to 1000 PPM, corresponding to 0.1%, represents a wire breakage in the data line.

4. Method according to one of the preceding claims, **characterized in that** the calculation factor is 10 000.

5. Method according to one of the preceding claims, **characterized in that** if the error rate exceeds a predefinable value then one of the two affected data ports or both data ports is/are shut down and a redundancy mechanism is activated.

6. Method according to one of the preceding claims, **characterized in that** the state of a data port is polled externally, in particular polled by SNMP.

## Revendications

1. Procédé pour faire fonctionner un réseau ayant une topologie prédéfinissable, plusieurs appareils de réseau qui sont reliés entre eux et échangent des données par l'intermédiaire de lignes de données multiconducteurs raccordées à leurs ports de données étant présents dans la topologie, des télégrammes de test étant en outre envoyés sur les lignes de données pour vérifier s'il existe ou non une liaison entre deux ports de données de deux appareils de réseau par l'intermédiaire de la ligne de données interconnectée, **caractérisé en ce que** le nombre d'erreurs de contrôle de redondance cyclique, CRC, survenues au cours d'un intervalle de temps prédéfinissable sur une ligne de données entre deux ports de données et le nombre des données transmises au cours de cet intervalle de temps sont déterminés et **en ce qu'**un taux d'erreur, qui est une mesure de la capacité fonctionnelle de la ligne de données multiconducteur, est calculé au moins à partir de ces deux valeurs, le taux d'erreur étant calculé par la formule : nombre des erreurs CRC plus nombre des données transmises, multiplié par un facteur de calcul, le résultat étant divisé par le nombre de données transmises.

2. Procédé selon la revendication 1, **caractérisé en ce que** l'intervalle de temps est supérieur ou égal à 1 seconde.

3. Procédé selon la revendication 1 ou 2, **caractérisé en ce qu'**un taux d'erreur supérieur ou égal à 1000 PPM correspondant à 0,1% représente une rupture de conducteur de la ligne de données.

4. Procédé selon l'une quelconque des revendications précédentes **caractérisé en ce que** le facteur de calcul est égal à 10000.

5. Procédé selon l'une quelconque des revendications précédentes, **caractérisé en ce que**, lorsque le taux d'erreur dépasse une valeur prédéfinissable, l'un des deux ports de données concernés ou les deux ports de données sont mis hors tension et un mécanisme de redondance est activé.

6. Procédé selon l'une quelconque des revendications précédentes, **caractérisé en ce que** l'état d'un port de données est interrogé de l'extérieur, notamment par SNMP.
